(19) Europäisches Patentamt
European Patent Office
Office européen des brevets

(11) **EP 2 985 313 B1**

(12) **EUROPEAN PATENT SPECIFICATION**

(45) Date of publication and mention
of the grant of the patent:
**20.03.2019 Bulletin 2019/12**

(51) Int Cl.:
***C08L 33/12*** (2006.01)     ***C08J 5/18*** (2006.01)
***C08L 51/00*** (2006.01)

(21) Application number: **14783388.3**

(22) Date of filing: **11.04.2014**

(86) International application number:
**PCT/JP2014/002092**

(87) International publication number:
**WO 2014/167868 (16.10.2014 Gazette 2014/42)**

(54) **ACRYLIC RESIN FILM**

ACRYLHARZFILM

FILM EN RÉSINE ACRYLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2013 JP 2013083628**

(43) Date of publication of application:
**17.02.2016 Bulletin 2016/07**

(73) Proprietor: **Kuraray Co., Ltd.**
**Kurashiki-shi, Okayama 710-0801 (JP)**

(72) Inventors:
• **MAEDA, Kaori**
**Tainai-shi**
**Niigata 959-2691 (JP)**
• **TSUJIMOTO, Takuya**
**Tainai-shi**
**Niigata 959-2691 (JP)**
• **HOSHIBA, Takao**
**Tainai-shi**
**Niigata 959-2691 (JP)**
• **NAKAHARA, Atsuhiro**
**Tainai-shi**
**Niigata 959-2691 (JP)**

(74) Representative: **Müller-Boré & Partner**
**Patentanwälte PartG mbB**
**Friedenheimer Brücke 21**
**80639 München (DE)**

(56) References cited:
EP-A2- 0 458 520     JP-A- H11 147 237
JP-A- S60 195 129    JP-A- 2002 020 571
JP-A- 2003 253 016   JP-A- 2007 056 226
JP-A- 2007 126 654   JP-A- 2009 235 236
JP-B2- 3 287 255     US-A1- 2004 106 732

• **LAURE LALANDE: 'The influence of matrix
modification on fracture mechanisms in rubber
toughened polymethylmethacrylate' POLYMER
vol. 47, 2006, pages 2389 - 2401, XP028060848**
• **C. HE: 'Morphology of a deformed rubber
toughened poly(methyl methacrylate) film under
tensile strain' J. MATER. SCI. vol. 32, 1997, pages
5661 - 5667, XP055285748**
• **R. SCHIRRER: 'Volume change and light
scattering during mechanical damage in
polymethylmethacrylate toughened with core-
shell rubber particles' J. MATER. SCI. vol. 31,
1996, pages 6409 - 6422, XP055285749**
• **Z.J. LEE: 'Rubber-Toughened Acrylic Polymers,
part 3: Preparation, Mechanical Properties and
Deformation Processes in Cast Sheet Materials'
POLYMERIC MATERIALS SCIENCE AND
ENGINEERING vol. 70, 1994, pages 157 - 158,
XP008182005**

**Description**

TECHNICAL FIELD

The present invention relates to an acrylic resin film. More specifically, the present invention relates to an acrylic resin film useful as a decorative film or the like, having excellent chemical resistance and excellent water resistance, and being produced at a low cost.

BACKGROUND ART

Treatment to coat a surface with a film for improving appearance, so-called decorating, is applied to many products. For the decorating, methods such as insert molding, in-mold molding, vacuum forming, and vacuum and pressure forming are employed. As films for use in the decorating, acrylic resin films are known.

As an example of the acrylic resin films, Patent Document 1 discloses an acrylic film or an acrylic sheet comprising a resin composition in which 95 to 50% by weight of an acrylic resin and 5 to 50% by weight of a multilayer acrylic polymer having an elastomeric layer are dispersed, the acrylic resin being obtained by copolymerizing 50 to 99% by weight of methyl methacrylate and 50 to 1% by weight of an alkyl acrylate ester.

Patent Document 2 discloses a film or a sheet comprising a methacrylic resin composition comprising 60 to 98% by mass of a methacrylic resin comprising not less than 80% by mass of a methyl methacrylate unit and not more than 20% by mass of a unit of a vinyl monomer copolymerizable with methyl methacrylate, 40 to 2% by mass of a multilayer polymer particle, and a silicone fine particle.

Patent Document 3 discloses a film comprising a methacrylic resin composition comprising a methacrylic thermoplastic polymer, a multilayered acrylic polymer particle, a hindered amine, a hindered phenol antioxidant, and a fatty acid metal salt; the methacrylic thermoplastic polymer comprising not less than 80% by mass of a unit derived from methyl methacrylate and not more than 20% by mass of a unit derived from a vinyl monomer copolymerizable with methyl methacrylate.

Patent Document 4 discloses an acrylic resin film obtained by melt extruding, through a T-die, an acrylic resin composition comprising an acrylic thermoplastic polymer and a rubber-containing polymer, the acrylic thermoplastic polymer comprising not less than 50% by mass of methyl methacrylate and not more than 50% by mass of a vinyl monomer copolymerizable with methyl methacrylate, and then passing the resultant between metal rolls, non-metal rolls, and/or metal belts with substantially no bank (a bank is a resin-rich area) to make a surface-transferred and non-rolled film.

In addition, for the purpose of improving chemical resistance, a film having an external cured resin layer (Patent Document 5), a film comprising a resin having a polymer molecular chain containing a (meth)acrylic acid structure (Patent Documents 6 and 7), and a film comprising a resin having an imidized (meth)acrylic structure (Patent Document 8) are suggested, for example.

CITATION LIST

Patent Document 1 : JP H10-279766 A
Patent Document 2 : JP 2004-263034 A
Patent Document 3 : JP 2012-180454 A
Patent Document 4 : JP 2002-3620 A
Patent Document 5 : JP 2008-265062 A
Patent Document 6 : JP 2009-235236 A
Patent Document 7 : JP 2010-236085 A
Patent Document 8 : JP 2010-18720 A

SUMMARY OF THE INVENTION

PROBLEMS TO BE RESOLVED BY THE INVENTION

The acrylic resin films described in these prior art documents have disadvantages of being poor in resistance against chemicals such as sunscreen lotions, sunscreen creams, insect repellents or the like, being poor in water resistance, or being costly to manufacture.

An object of the present invention is to provide an acrylic resin film useful as a decorative film or the like, having excellent chemical resistance and excellent water resistance, and being produced at a low cost.

MEANS FOR SOLVING THE PROBLEMS

Methyl methacrylate homopolymers are known to readily decompose and have low heat resistance. Methyl methacrylate homopolymers are also known to have poor melt formability because of their high melt viscosity. It is also known that dimers and the like being by-products in homo-polymerization of methyl methacrylate easily lead to making defects such as deposition in a film formed from the methyl methacrylate homopolymer. Therefore, practical use of methyl methacrylate homopolymers is limited to casting polymerization. Methacrylic resins for use in such formation processes are produced by copolymerizing 50 to 99% by weight of methyl methacrylate and 50 to 1% by weight of an alkyl acrylate ester, as specifically disclosed in these patent documents above.

With these as background art, studies have been carried out to achieve the object described above, as a result, the present invention, as specified in the claims, has now been completed

[1] An acrylic resin film having a thickness of 20 to 300 μm, and comprising a resin composition which comprises 70 to 95% by mass of an acrylic thermoplastic resin component comprising more than 99% by mass of a methyl methacrylate unit and not more than 1% by mass of an alkyl acrylate ester unit, and 5 to 30% by mass of a crosslinked rubber particle component.

[2] The acrylic resin film according to [1], in which the acrylic thermoplastic resin component is a homopolymer (A) comprising a methyl methacrylate unit. The acrylic thermoplastic resin component may further comprise a copolymer (C) comprising a methyl methacrylate unit and an alkyl acrylate ester unit, a mixture of a homopolymer (A) comprising a methyl methacrylate unit and a homopolymer (B) comprising an alkyl acrylate ester unit, and a mixture of a homopolymer (A) comprising a methyl methacrylate unit and a copolymer (C) comprising a methyl methacrylate unit and an alkyl acrylate ester unit.

[3] The acrylic resin film according to [1], in which the acrylic thermoplastic resin component comprises a homopolymer (A) comprising a methyl methacrylate unit, and the content of the homopolymer (A) is not less than 80% by mass.

[4] The acrylic resin film according to [3], in which the polymer (A) has a double-bond content of less than 0.02 mol%, a sulfur content of 400 to 700 ppm, and a trimer content of not more than 50 ppm.

[5] The acrylic resin film according to any one of [1] to [4], in which the crosslinked rubber particle component has an average particle diameter of 0.05 to 1 μm.

[6] The acrylic resin film according to any one of [1] to [5], the crosslinked rubber particle component comprising a multilayered acrylic polymer particle which comprises at least one inner layer comprising a crosslinked rubber polymer (I) primarily comprising a unit derived from an alkyl acrylate ester monomer having an alkyl group having 1 to 8 of carbon atoms and/or a unit derived from a conjugated diene monomer, and an outermost layer comprising a thermoplastic polymer (II) primarily comprising a unit derived from an alkyl methacrylate ester monomer having an alkyl group having 1 to 8 carbon atoms.

[7] The acrylic resin film according to any one of [1] to [6], being a biaxial stretched film.

[8] The acrylic resin film according to any one of [1] to [7], in which the acrylic thermoplastic resin component is a bulk polymerized product of methyl methacrylate.

[9] A method for producing the acrylic resin film according to any one of [1] to [8], the method comprising:

extruding, through a T-die, a resin composition comprising 70 to 95% by mass of an acrylic thermoplastic resin component comprising more than 99% by mass of a methyl methacrylate unit and not more than 1% by mass of an alkyl acrylate ester unit, and 5 to 30% by mass of a crosslinked rubber particle component, and subsequently forming the resultant into a thickness of 20 to 300 μm with no bank.

[10] The method for producing the acrylic resin film according to [9], further comprising bulk-polymerizing a monomer comprising at least methyl methacrylate to obtain the acrylic thermoplastic resin component.

ADVANTAGEOUS EFFECTS OF THE INVENTION

The acrylic resin film of the present invention has excellent chemical resistance and excellent water resistance and is produced at a low cost. The acrylic resin film of the present invention has excellent resistance particularly against chemicals such as sunscreen lotions, sunscreen creams, insect repellents or the like. The acrylic resin film of the present invention can be preferably used for decorating of various products.

EMBODIMENTS FOR CARRYING OUT THE INVENTION

An acrylic resin film of the present invention is a film comprising a resin composition comprising an acrylic thermoplastic resin component and a crosslinked rubber particle component.

The acrylic thermoplastic resin component comprises more than 99% by mass of a methyl methacrylate unit and not more than 1% by mass of an alkyl acrylate ester unit, preferably more than 99% by mass of a methyl methacrylate unit and less than 1% by mass of an alkyl acrylate ester unit, further preferably not less than 99.2% by mass of a methyl methacrylate unit and not more than 0.8% by mass of an alkyl acrylate ester unit, further more preferably not less than 99.5% by mass of a methyl methacrylate unit and not more than 0.5% by mass of an alkyl acrylate ester unit, and most preferably 100% by mass of a methyl methacrylate unit.

The acrylic thermoplastic resin component may comprise a methyl methacrylate unit and an alkyl acrylate ester unit in a single resin polymer or may comprise a methyl methacrylate unit and an alkyl acrylate ester unit separately in two or more resin polymers, provided that the acrylic thermoplastic resin component as a whole comprises a methyl methacrylate unit and an alkyl acrylate ester unit within the ranges described above.

Examples of the acrylic thermoplastic resin component comprising a methyl methacrylate unit and an alkyl acrylate ester unit in a single resin polymer include a homopolymer (A) comprising a methyl methacrylate unit, a copolymer (C) comprising a methyl methacrylate unit and an alkyl acrylate ester unit, and the like.

Examples of the acrylic thermoplastic resin component comprising a methyl methacrylate unit and an alkyl acrylate ester unit separately in two or more resin polymers include a mixture of a homopolymer (A) comprising a methyl methacrylate unit and a homopolymer (B) comprising an alkyl acrylate ester unit; a mixture of a homopolymer (A) comprising a methyl methacrylate unit and a copolymer (C) comprising a methyl methacrylate unit and an alkyl acrylate ester unit; and the like.

The acrylic thermoplastic resin component is preferably a homopolymer (A) comprising a methyl methacrylate unit; a mixture of a homopolymer (A) comprising a methyl methacrylate unit and a homopolymer (B) comprising an alkyl acrylate ester unit; or a mixture of a homopolymer (A) comprising a methyl methacrylate unit and a copolymer (C) comprising a methyl methacrylate unit and an alkyl acrylate ester unit. In these cases, the acrylic thermoplastic resin component particularly preferably comprises a homopolymer (A) comprising a methyl methacrylate unit in an amount of not less than a particular amount. The reason for this is that when the homopolymer (A) is contained in an amount of not less than the particular amount, chemical resistance is significantly enhanced. The amount of a homopolymer (A) comprising a methyl methacrylate unit in the acrylic thermoplastic resin component is preferably not less than 60% by mass, more preferably not less than 70% by mass, and further preferably not less than 80% by mass.

Each of a methyl methacrylate unit and an alkyl acrylate ester unit comprised in the acrylic thermoplastic resin component is obtained by an addition polymerization in a carbon-carbon double bond of methyl methacrylate or a alkyl acrylate ester, respectively.

Examples of the alkyl acrylate ester include methyl acrylate, ethyl acrylate, propyl acrylate, butyl acrylate, 2-ethylhexyl acrylate, and the like.

The weight average molecular weight (Mw) of the acrylic thermoplastic resin component is preferably not less than fifty thousand and not more than one hundred fifty thousand, more preferably not less than sixty thousand and not more than one hundred fifty thousand, and further preferably not less than seventy thousand and not more than one hundred thousand. The ratio of weight average molecular weight (Mw)/number average molecular weight (Mn) (hereinafter, this ratio is sometimes called a molecular weight distribution) of the acrylic thermoplastic resin component is preferably from 1.7 to 2.6, more preferably from 1.7 to 2.3, and particularly preferably from 1.7 to 2.0. When the molecular weight distribution is small, the forming processability of the resin composition tends to decrease, while when the molecular weight distribution is great, the impact resistance of a film produced from the resin composition tends to be low which makes the film brittle.

The weight average molecular weight and the number average molecular weight are determined by subjecting the acrylic thermoplastic resin component to analysis on gel permeation chromatography (GPC) and evaluating the molecular weight in terms of the molecular weight of standard polystyrene. The weight average molecular weight and the molecular weight distribution of the acrylic thermoplastic resin component can be controlled by adjusting, for example, the kinds and the amounts of a polymerization initiator and a chain transfer agent used in production of the acrylic thermoplastic resin component or by adjusting the mixing ratio of the two or more resin polymers.

A homopolymer (A) comprising a methyl methacrylate unit suitably used in the present invention has a double-bond content of preferably less than 0.02 mol% and more preferably less than 0.015 mol%.

The double-bond content can be controlled by adjusting, for example, the amounts of a polymerization initiator and a chain transfer agent used in production of the polymer (A), the temperature during the polymerization, and the duration of polymerization. For example, in terms of lowering the double-bond content, it is preferable to reduce the amount of the polymerization initiator, to increase the amount of the chain transfer agent, to lower the temperature during the polymerization, and to increase the duration of polymerization.

The double-bond content D (mol%) is determined as follows. First, a resin for measurement is dissolved in deuterated chloroform to give a solution containing 15 to 20% by mass of the resin. To the resulting solution, europium tris (6,6,7,7,8,8,8-heptafluoro-2,2-dimethyl-3,5-octanedionate) as a peak-shifting reagent in an amount of 10% by mass relative to the resin is added, followed by measuring an $H^1$-NMR spectrum for not less than 12 hours and calculating the total thereof. Then, calculation is performed by a numerical formula of D = (X/2) / (Y/3) $\times$ 100, in which X is the total integral intensity of peaks derived from double bonds (resonance frequency: 5.5 ppm and 6.2 ppm) and Y is the integral intensity of peaks derived from methoxy groups (resonance frequency: 3.6 ppm).

The polymer (A) comprising a methyl methacrylate unit suitably used in the present invention has a sulfur content of preferably 400 to 700 ppm.

The sulfur content can be controlled by adjusting the amount of a sulfur-containing compound such as a sulfur-based chain transfer agent and a persulfate-based polymerization initiator used in production of the polymer (A). A bonded sulfur atom here is preferably in the form of a sulfide group bonded to a terminal of the methacrylic resin.

The sulfur content is determined as follows. A resin for measurement is dissolved in chloroform and then precipitated with n-hexane, followed by vacuum drying at 80 °C for not less than 12 hours. Subsequently, a proper amount of the resulting sample is precisely weighed and placed in a sulfur combustion apparatus at a furnace temperature of 400 °C for decomposition. The generated gas is passed through a chamber at 900 °C and then absorbed in a 0.3% hydrogen peroxide solution to obtain a sulfur solution. The sulfur solution is diluted with a deionized water as needed, and the resultant is subjected to ion chromatography analysis (ICS-1500 manufactured by DIONEX, column: AS12A) for quantitative assessment of sulfate ions. A mass ratio of sulfur atoms contained in the resin is calculated on the evaluated amount of sulfate ions and the weight of the sample.

The trimer content of the polymer (A) comprising a methyl methacrylate unit suitably used in the present invention is preferably not more than 50 ppm and more preferably not more than 30 ppm. The trimer is a viscous liquid having a high boiling point and it is difficult to remove the trimer from the resin polymer. Because of this, when the trimer content exceeds 50 ppm, chemical resistance is impaired and a defect due to deposition of decomposed resin tends to occur during film formation. The trimer content can be controlled by adjusting conditions for purification of the polymer (A) .

The trimer content is determined as follows. A resin for measurement is dissolved in chloroform to give a solution, which is subjected to extraction and separation with hexane, followed by quantitative assessment of trimers by gas chromatography. The mass ratio of trimer contained in the resin is calculated on the evaluated amount of trimer and the weight of the sample.

When the polymer (A) used meets the above double-bond content, sulfur content, and trimer content, the chemical resistance and the water resistance to be obtained are in an excellent balance.

The polymers (A), (B), and (C) used as the acrylic thermoplastic resin component (hereinafter, such polymers are sometimes called resin polymer) can be obtained by polymerizing methyl methacrylate and/or alkyl acrylate esters (hereinafter, each sometimes called a polymerization reaction material) in such a weight-based proportion that achieves the predetermined monomer unit configuration.

The polymerization reaction material used in production of the resin polymer preferably has a yellow index of not more than 2 and more preferably not more than 1. When the yellow index of the polymerization reaction material is small, a film with little discoloration tends to be obtained with high production efficiency. The yellow index is measured using a colorimeter ZE-2000 manufactured by Nippon Denshoku Industries Co., Ltd. in conformity with JIS Z-8722.

The polymerization reaction in production of the resin polymer can be performed, for example, by the bulk polymerization method, the solution polymerization method, the suspension polymerization method, or the emulsion polymerization method. The polymers (B) and (C) can be produced by a known method with no particular limitation. The polymer (A) can be produced preferably by the bulk polymerization method or the solution polymerization method and more preferably by the bulk polymerization method. The bulk polymerization method tends to give a polymer containing few impurities. The bulk polymerization method is preferably performed by continuous bulk polymerization. The polymerization reaction is initiated by adding a polymerization initiator to the polymerization reaction material. By adding a chain transfer agent to the polymerization reaction material, the weight average molecular weight and the like of the resulting resin polymer can be controlled. The dissolved oxygen level in the polymerization reaction material is preferably not more than 10 ppm, more preferably not more than 5 ppm, further preferably not more than 4 ppm, and most preferably not more than 3 ppm. When the polymerization reaction material used has a dissolved oxygen level within this range, the polymerization reaction proceeds smoothly and a film having no silver streak nor discoloration tends to be obtained.

The polymerization initiator is not particularly limited provided that it generates a reactive radical. Examples thereof include tert-hexylperoxy isopropyl monocarbonate, tert-hexylperoxy 2-ethylhexanoate, 1,1,3,3-tetramethylbutylperoxy 2-ethylhexanoate, tert-butylperoxy pivalate, tert-hexylperoxy pivalate, tert-butylperoxy neodecanoate, tert-hexylperoxy neodecanoate, 1,1,3,3-tetramethylbutylperoxy neodecanoate, 1,1-bis(tert-hexylperoxy) cyclohexane, benzoyl peroxide, 3,5,5-trimethylhexanoyl peroxide, lauroyl peroxide, 2,2'-azobis(2-methylpropionitrile), 2,2'-azobis(2-methylbutyronitrile), dimethyl 2,2'-azobis(2-methylpropionate), and the like. Among these, tert-hexylperoxy 2-ethylhexanoate, 1,1-bis(tert-hexylperoxy) cyclohexane, and dimethyl 2,2'-azobis(2-methylpropionate) are preferable.

The 1-hour half-life temperature of the polymerization initiator is preferably 60 °C to 140 °C and is more preferably 80 °C to 120 °C. The hydrogen abstraction ability of the polymerization initiator when used in bulk polymerization is preferably not more than 20%, more preferably not more than 10%, and further preferably not more than 5%. Such a polymerization initiator can be used alone or in combination of two or more thereof. The added amount of the polymerization initiator and the method of adding the polymerization initiator are not particularly limited and may be determined as appropriate in accordance with the purpose. The amount of the polymerization initiator used in bulk polymerization, for example, is preferably 0.0001 to 0.02 part by mass, more preferably 0.001 to 0.01 part by mass, and further preferably 0.005 to 0.007 part by mass relative to 100 parts by mass of the polymerization reaction material.

The hydrogen abstraction ability can be measured by the radical trapping method using an $\alpha$-methylstyrene dimer, in other words, by the $\alpha$-methylstyrene dimer trapping method. The measurement is carried out as follows. First, in the co-presence of $\alpha$-methylstyrene dimer serving as a radical-trapping agent, the polymerization initiator is cleaved into radical fragments. Among the resulting radical fragments, a radical fragment having a low hydrogen abstraction ability adds to a double bond of $\alpha$-methylstyrene dimer and is trapped by the double bond of the $\alpha$-methylstyrene dimer, while a radical fragment having a high hydrogen abstraction ability abstracts hydrogen from cyclohexane to generate a cyclohexyl radical, which adds to a double bond of $\alpha$-methylstyrene dimer and is trapped by the double bond of the $\alpha$-methylstyrene dimer to generate a cyclohexane-trapped product. Then, the cyclohexane or the cyclohexane-trapped product is quantitatively assessed, and the resulting value is used to determine the ratio (molar fraction) of the amount of radical fragments having a high hydrogen abstraction ability to the theoretical amount of radical fragments generated. The resulting ratio serves as the hydrogen abstraction ability.

Examples of the chain transfer agent include alkylmercaptans such as n-octyl mercaptan, n-dodecyl mercaptan, tert-dodecyl mercaptan, 1,4-butanedithiol, 1,6-hexanedithiol, ethylene glycol bisthiopropionate, butanediol bisthioglycolate, butanediol bisthiopropionate, hexanediol bisthioglycolate, hexanediol bisthiopropionate, trimethylolpropane tris-($\beta$-thiopropionate), and pentaerythritol tetrakisthiopropionate, and the like. Among these, monofunctional alkylmercaptans such as n-octyl mercaptan and n-dodecyl mercaptan are preferable. The chain transfer agent can be used alone or in combination of two or more thereof. The amount of the chain transfer agent used is preferably 0.1 to 1 part by mass, more preferably 0.15 to 0.8 part by mass, further preferably 0.2 to 0.6 part by mass, and particularly preferably 0.2 to 0.5 part by mass relative to 100 parts by mass of the polymerization reaction material. The amount of the chain transfer agent used is preferably 2500 to 7000 parts by mass, more preferably 3500 to 4500 parts by mass, and 3800 to 4300 parts by mass relative to 100 parts by mass of the polymerization initiator.

A solvent used in solution polymerization is not particularly limited provided that it is capable of dissolving the polymerization reaction material and the resulting resin polymer. The solvent used in solution polymerization is preferably an aromatic hydrocarbon such as benzene, toluene, and ethylbenzene. The solvent can be used alone or in combination of two or more thereof. The amount of the solvent used is preferably not more than 100 parts by mass and more preferably not more than 90 parts by mass relative to 100 parts by mass of the polymerization reaction material. As the amount of the solvent used increases, the reaction product solution becomes less viscous to give better handling, but productivity tends to decrease.

When the continuous bulk polymerization method is employed, the polymerization conversion ratio for the polymerization reaction material is controlled to fall within the range of preferably from 20 to 80% by mass, more preferably from 30 to 70% by mass, and further preferably from 35 to 65% by mass. When the polymerization conversion ratio is too high, the viscosity rises and therefore stirring force required tends to be great, while when the polymerization conversion ratio is too low, removal of a remaining monomer proceeds insufficiently and the resulting film tends to have a defective appearance such as silver streak. An unreacted monomer can be recovered from the polymerization reaction solution and then reused in the polymerization reaction. The yellow index of such a recovered monomer may rise due to heat that is applied at the time of recovery and the like. Such a recovered monomer is preferably purified by a suitable method so as to lower the yellow index.

Examples of an apparatus used for the bulk polymerization method or the solution polymerization method include a tank reactor equipped with a stirrer, a tube reactor equipped with a stirrer, a tube reactor capable of statically stirring, and the like. One or more of these reactors may be used, or two or more different reactors may be used in combination. The apparatus may operate either in a batch mode or in a continuous flow mode. The stirrer used can be selected depending on the operating mode of the reactor. Examples of the stirrer include a dynamic stirrer, a static stirrer, and the like. The most preferable apparatus for use to give the resin polymer used in the present invention is one having at least one continuous-flow tank reactor. A plurality of continuous-flow tank reactors, when used, may be connected either in series or in parallel.

The tank reactor usually has a stirring means for stirring liquid in the reaction tank, an inlet for feeding the polymerization reaction material, auxiliary materials for polymerization and the like to the reaction tank, and an outlet for discharging the reaction product out of the reaction tank. In a continuous-flow reaction, the amount to be fed to the reaction tank and the amount to be discharged out of the reaction tank are kept in balance so as to retain approximately the same amount of liquid in the reaction tank. The amount of liquid in the reaction tank is preferably not less than 1/4, more preferably 1/4 to 3/4, and further preferably 1/3 to 2/3 of the capacity of the reaction tank.

Examples of the stirring means include a Maxblend stirring device, a stirring device in which a grid-like blade rotates about a vertical rotation axis located at the center, a propeller-driven stirring device, a screw stirring device, and the like. Among these, a Maxblend stirring device is preferably used in terms of homogeneous mixing.

The polymerization reaction material, the polymerization initiator, and the chain transfer agent may be mixed together before being fed to the reaction tank or may be fed to the reaction tank separately. In the present invention, the polymerization reaction material, the polymerization initiator, and the chain transfer agent are preferably mixed together before being fed to the reaction tank.

The polymerization reaction material, the polymerization initiator, and the chain transfer agent are preferably mixed in an inert atmosphere such as in nitrogen gas. In order to allow the continuous-flow operation to proceed smoothly, it is preferable to continuously feed the polymerization reaction material, the polymerization initiator, and the chain transfer agent respectively from a tank storing each through a tube to a mixer provided upstream of the reaction tank, while mixing, and then feed the resulting mixture continuously to the reaction tank. The mixer can be equipped with a dynamic stirrer or a static stirrer.

The temperature during the polymerization reaction is preferably 100 °C to 150 °C and more preferably 110 °C to 140 °C. The duration of the polymerization reaction is preferably 0.5 to 4 hours and more preferably 1 to 3 hours. When a continuous-flow reactor is used, the duration of the polymerization reaction is the average residence time in the reactor. When the duration of the polymerization reaction is too short, the amount of the polymerization initiator required is great. When the amount of the polymerization initiator is great, there is a tendency that the control of the polymerization reaction and the control of the molecular weight are difficult. On the other hand, when the duration of the polymerization reaction is too long, there is a tendency that it takes long for the reaction to reach a steady state and productivity decreases. Polymerization is preferably carried out in an atmosphere of an inert gas such as nitrogen gas.

After the completion of polymerization, an unreacted monomer and a solvent are removed where appropriate. The method of removal is not particularly limited and is preferably heat devolatization. Examples of the method of devolatization include the equilibrium flash process, the adiabatic flash process, and the like. Particularly in the adiabatic flash process, the temperature in devolatization is preferably 200 °C to 300 °C and more preferably 220 °C to 270 °C. When the temperature is lower than 200 °C, devolatization takes a long time and tends to proceed insufficiently. If devolatization proceeds insufficiently, the shaped article may have a defective appearance such as a silver streak. On the other hand, when the temperature exceeds 300 °C, oxidation, burning, and the like tend to occur to cause discoloration in the composition.

The polymer (A) produced by the method described above has excellent resistance to thermal decomposition and is easily formed into a film. In addition, the polymer (A) produced by the method described above is almost free of a so-called oligomer composed of 3 molecules of methyl methacrylate (trimer) to about 10 molecules of methyl methacrylate, in other words, containing, for example, the trimer in an amount of not more than 50 ppm. Besides, the polymer (A) produced by the method described above has excellent chemical resistance. The polymers (A), (B), and (C) are used alone or in combination of two or more thereof to achieve the monomer unit proportion described above and to serve as the acrylic thermoplastic resin component.

In the present invention, in order to inhibit handleability and melt-kneading dispersibility from being impaired due to agglutination between crosslinked rubber particles, which will be described below, and in order to inhibit the surface properties of the shaped article from being impaired, part of the acrylic thermoplastic resin component contained is preferably in particle form (hereinafter, called a dispersion particle (b)). Formulation of the dispersion particle (b) can be performed by mixing a polymer latex or a polymer dispersion in which the dispersion particle (b) is dispersed in water, with a polymer latex in which the crosslinked rubber particle is dispersed in water. The average particle diameter of the dispersion particle (b) is preferably smaller than the average particle diameter of the crosslinked rubber particle. Specifically, the average particle diameter of the dispersion particle (b) is preferably 0.04 to 0.12 μm and more preferably 0.05 to 0.1 μm.

In terms of the effect on dispersibility and from other viewpoints, the content of the dispersion particle (b) in the acrylic thermoplastic resin component is preferably 0 to 70% by mass, more preferably 5 to 60% by mass, and further preferably 10 to 50% by mass. The amount of the dispersion particle (b) in terms of the mass ratio to the crosslinked rubber particle is preferably from 0/100 to 60/40, more preferably from 10/90 to 50/50, and further preferably from 20/80 to 40/60.

The amount of the acrylic thermoplastic resin component contained in the resin composition according to the present invention is usually 70 to 95% by mass, preferably 75 to 90% by mass, and more preferably 80 to 85% by mass relative to the entire resin composition.

The crosslinked rubber particle component used in the present invention is not particularly limited provided that it comprises at least a crosslinked rubber polymer. Examples of the crosslinked rubber polymer include a crosslinked rubber polymer (I) that primarily comprises a unit derived from an alkyl acrylate ester monomer having an alkyl group with 1 to 8 of carbon atoms and/or a unit derived from a conjugated diene monomer and, where appropriate, further comprises a unit derived from a crosslinkable monomer and/or a unit derived from the other vinyl monomer, and the like.

The crosslinked rubber particle component suitably used in the present invention is preferably a multilayered acrylic polymer particle. The multilayered acrylic polymer particle comprises a plurality of layers that are substantially concentrically stacked from the core toward the outer shell of the particle. The layers in the multilayered acrylic polymer particle are preferably aligned with no gap between the layers.

The multilayered acrylic polymer particle comprises one, two, or more inner layers. At least one of the inner layers comprises the crosslinked rubber polymer (I) primarily comprising a unit derived from an alkyl acrylate ester monomer having an alkyl group with 1 to 8 of carbon atoms and/or a unit derived from a conjugated diene monomer.

The multilayered acrylic polymer particle comprises an outermost layer that comprises a thermoplastic polymer (II) primarily comprising a unit derived from an alkyl methacrylate ester monomer having an alkyl group with 1 to 8 of carbon atoms.

The crosslinked rubber polymer (I) comprised in at least one of the inner layers of the multilayered acrylic polymer particle primarily comprises a unit derived from an alkyl acrylate ester monomer having an alkyl group with 1 to 8 of carbon atoms and/or a unit derived from a conjugated diene monomer.

Examples of the alkyl acrylate ester monomer having an alkyl group with 1 to 8 of carbon atoms include methyl acrylate, ethyl acrylate, propyl acrylate, butyl acrylate, 2-ethylhexyl acrylate, and the like. Examples of the conjugated diene monomer include butadiene, isoprene, and the like. These may be used alone or in combination of two or more thereof.

The amount of the unit derived from an alkyl acrylate ester monomer having an alkyl group with 1 to 8 of carbon atoms and/or the unit derived from a conjugated diene monomer comprised in the crosslinked rubber polymer (I) is preferably not less than 60% by mass, more preferably 70 to 99% by mass, and further preferably 80 to 98% by mass relative to the total mass of the crosslinked rubber polymer (I).

The crosslinked rubber polymer (I) preferably comprises a unit derived from a crosslinkable monomer. Examples of the crosslinkable monomer include multifunctional monomers such as ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate, triallyl isocyanate, and the like. These may be used alone or in combination of two or more thereof.

The amount of the unit derived from a crosslinkable monomer comprised in the crosslinked rubber polymer (I) is preferably 0.05 to 10% by mass, more preferably 0.5 to 7% by mass, and further preferably 1 to 5% by mass relative to the total mass of the crosslinked rubber polymer (I).

The crosslinked rubber polymer (I) may comprise a unit derived from the other vinyl monomer. The other vinyl monomer is not particularly limited provided that it is copolymerizable with the alkyl acrylate ester monomer and the crosslinkable monomer. Examples of the other vinyl monomer include methacrylic acid ester monomers such as methyl methacrylate, ethyl methacrylate, butyl methacrylate and cyclohexyl methacrylate; aromatic vinyl monomers such as styrene, p-methylstyrene, and o-methylstyrene; maleimide monomers such as N-propylmaleimide, N-cyclohexylmaleimide, and N-o-chlorophenylmaleimide; and the like. These may be used alone or in combination of two or more thereof.

The amount of the unit derived from the other vinyl monomer comprised in the crosslinked rubber polymer (I) is preferably not more than 40% by mass, more preferably 5 to 35% by mass, and further preferably 10 to 30% by mass.

When the multilayered acrylic polymer particle has two or more inner layers, the inner layer may comprise a layer comprising a polymer (III) in addition to a layer comprising the crosslinked rubber polymer (I). The polymer (III) is not particularly limited, and preferably comprises a unit derived from an alkyl methacrylate ester monomer having an alkyl group with 1 to 8 carbon atoms and, where appropriate, a unit derived from a crosslinkable monomer and/or a unit derived from the other vinyl monomer.

Examples of the alkyl methacrylate ester monomer having an alkyl group with 1 to 8 carbon atoms include methyl methacrylate, ethyl methacrylate, butyl methacrylate, and the like. These may be used alone or in combination of two or more thereof. Among these, methyl methacrylate is preferable.

The amount of the unit derived from an alkyl methacrylate ester monomer having an alkyl group with 1 to 8 carbon atoms comprised in the polymer (III) is preferably 80 to 100% by mass, more preferably 85 to 99% by mass, and further preferably 90 to 98% by mass.

Examples of the crosslinkable monomer comprised in the polymer (III) include the same monomers as the crosslinkable monomers exemplified above for the polymer (I). The amount of the unit derived from a crosslinkable monomer comprised in the polymer (III) is preferably 0 to 5% by mass, more preferably 0.01 to 3% by mass, and further preferably 0.02 to 2% by mass.

The other vinyl monomer comprised in the polymer (III) is not particularly limited provided that it is copolymerizable with the alkyl methacrylate ester monomer and the crosslinkable monomer. Examples of the other vinyl monomer comprised in the polymer (III) include acrylic acid ester monomers such as methyl acrylate, ethyl acrylate, propyl acrylate, butyl acrylate, hexyl acrylate, cyclohexyl acrylate, phenyl acrylate, benzyl acrylate, 2-ethylhexyl acrylate and the like; vinyl acetate; aromatic vinyl monomers such as styrene, p-methylstyrene, m-methylstyrene, o-methylstyrene, α-methylstyrene, vinylnaphthalene and the like; nitriles such as acrylonitrile, methacrylonitrile and the like; $\alpha,\beta$-unsaturated carboxylic acids such as acrylic acid, methacrylic acid, crotonic acid and the like; maleimide monomers such as N-ethylmaleimide, N-cyclohexylmaleimide, and the like. These may be used alone or in combination of two or more thereof.

The amount of the unit derived from the other vinyl monomer comprised in the polymer (III) is preferably 0 to 20% by mass, more preferably 1 to 15.99% by mass, and further preferably 2 to 9.98% by mass.

The thermoplastic polymer (II) comprised in the outermost layer of the multilayered acrylic polymer particle primarily comprises a unit derived from an alkyl methacrylate ester monomer having an alkyl group with 1 to 8 carbon atoms.

Examples of the alkyl methacrylate ester monomer having an alkyl group with 1 to 8 carbon atoms include methyl methacrylate, butyl methacrylate, and the like. These may be used alone or in combination of two or more thereof. Among these, methyl methacrylate is preferable.

The amount of the unit derived from an alkyl methacrylate ester monomer having an alkyl group with 1 to 8 carbon atoms comprised in the thermoplastic polymer (II) is preferably not less than 80% by mass, more preferably not less than 85% by mass, and further preferably not less than 90% by mass.

The thermoplastic polymer (II) may comprise a unit derived from the other vinyl monomer. The other vinyl monomer is not particularly limited provided that it is copolymerizable with the alkyl methacrylate ester monomer. Examples of the other vinyl monomer comprised in the thermoplastic polymer (II) include the same monomers as the other vinyl monomers exemplified above for the polymer (III).

The amount of the unit derived from the other vinyl monomer comprised in the thermoplastic polymer (II) is preferably not more than 20% by mass, more preferably not more than 15% by mass, and further preferably not more than 10% by mass.

The multilayer structure of the multilayered acrylic polymer particle is not particularly limited provided that it comprises an outermost layer and an inner layer. Various multilayer structures can be employed, including a two-layer polymer particle comprising a core (inner layer) composed of the crosslinked rubber polymer (I) and an outer shell (outermost layer) composed of the thermoplastic polymer (II), a three-layer polymer particle comprising as a core (inner layer) composed of the polymer (III), an inner shell (inner layer) composed of the crosslinked rubber polymer (I) and an outer shell (outermost layer) composed of the thermoplastic polymer (II), and a four-layer polymer particle comprising a core (inner layer) composed of the crosslinked rubber polymer (I), a first inner shell (inner layer) composed of the polymer (III), a second inner shell (inner layer) composed of the crosslinked rubber polymer (I) and an outer shell (outermost layer) composed of the thermoplastic polymer (II). Among these, preferred is a three-layer polymer particle comprising a core (inner layer) composed of the polymer (III), an inner shell (inner layer) composed of the crosslinked rubber polymer (I) and an outer shell (outermost layer) composed of the thermoplastic polymer (II). More preferred is a three-layer polymer particle comprising a core (inner layer) comprising the polymer (III) produced by polymerization of 80 to 99.95% by mass of methyl methacrylate, 0 to 19.95% by mass of an alkyl acrylate ester monomer having an alkyl group with 1 to 8 of carbon atoms and 0.05 to 2% by mass of a crosslinkable monomer, an inner shell (inner layer) comprising the crosslinked rubber polymer (I) produced by polymerization of 80 to 98% by mass of an alkyl acrylate ester monomer having an alkyl group with 1 to 8 of carbon atoms, 1 to 19% by mass of an aromatic vinyl monomer and 1 to 5% by mass of a crosslinkable monomer, and an outer shell (outermost layer) comprising a the thermoplastic polymer (II) produced by polymerization of 80 to 100% by mass of methyl methacrylate and 0 to 20% by mass of an alkyl acrylate ester monomer having an alkyl group with 1 to 8 of carbon atoms. From the viewpoint of transparency of the multilayered acrylic polymer particle, polymers comprised in the each layer are preferably selected such that the difference in the refractive indices of the adjacent layers is preferably less than 0.005, more preferably less than 0.004, and further preferably less than 0.003.

The mass ratio of the inner layer(s) to the outermost layer in the multilayered acrylic polymer particle is preferably 60/40 to 95/5 and is more preferably 70/30 to 90/10. In the inner layer(s), a layer(s) comprising the crosslinked rubber polymer (I) account for preferably 20 to 100% by mass and more preferably 30 to 70% by mass of the inner layer(s).

The average particle diameter of the crosslinked rubber particle component used in the present invention is preferably 0.05 to 1 $\mu$m, more preferably 0.1 to 0.5 $\mu$m, and further preferably 0.1 to 0.3 $\mu$m. As long as the average particle diameter falls within this range, two or more crosslinked rubber particles having different particle diameters can be used in combination. When the crosslinked rubber particle component used has an average particle diameter within the range, and in particular an average particle diameter of 0.1 to 0.3 $\mu$m, defects in the appearance of the shaped article can be remarkably reduced. The average particle diameter in the present specification is the arithmetic mean of a volume-based particle diameter distribution measured by the light scattering method.

The method for producing the crosslinked rubber particle component is not particularly limited, and the emulsion polymerization method is preferably employed. Specifically, the crosslinked rubber particle component can be obtained by emulsion polymerization of monomers composing the crosslinked rubber polymer (I). The multilayered acrylic polymer particle used as the crosslinked rubber particle component can be obtained by performing emulsion polymerization of monomers composing the innermost layer of the multilayered acrylic polymer particle to give a seed particle, and in the presence of the seed particle, sequentially adding monomers composing each layer to perform polymerization to successively form all the layers including the outermost layer.

Examples of an emulsifier used in the emulsion polymerization include anionic emulsifiers, for instance, dialkyl sulfosuccinic acid salts such as sodium dioctyl sulfosuccinate, sodium dilauryl sulfosuccinate and the like, alkylbenzenesulfonic acid salts such as sodium dodecylbenzenesulfonate and the like, alkylsulfuric acid salts such as sodium dodecyl sulfate and the like; nonionic emulsifiers, for instance, polyoxyethylene alkyl ethers, polyoxyethylene nonylphenyl ethers, and the like; nonionic anionic emulsifiers, for instance, polyoxyethylene nonylphenyl ether sulfuric acid salts such as sodium polyoxyethylene nonylphenyl ether sulfate and the like, polyoxyethylene alkyl ether sulfuric acid salts such as sodium polyoxyethylene alkyl ether sulfate and the like, and alkyl ether carboxylic acid salts such as sodium polyoxyethylene tridecyl ether acetate and the like. These may be used alone or in combination of two or more thereof. The average number of repeating of ethylene oxide units in the compounds exemplified as the nonionic emulsifiers and the nonionic anionic emulsifiers is preferably not more than 30, more preferably not more than 20, and further preferably not more than 10 such that the foaming performance of the emulsifier does not rise too much.

The polymerization initiator used in the emulsion polymerization is not particularly limited. Examples thereof include persulfuric acid salt initiators such as potassium persulfate, ammonium persulfate and the like; redox initiators such as persulfoxilates/organic peroxides, persulfuric acid salts/sulfurous acid salts, and the like.

From a polymer latex obtained by the emulsion polymerization, the crosslinked rubber particle component can be obtained by separation by a known method such as the salting-out coagulation method, the freeze coagulation method, the spray drying method and the like. Among these, for the reason that impurities in the crosslinked rubber particle component can be easily removed by washing with water, the salting-out coagulation method and the freeze coagulation method are preferable and the freeze coagulation method is more preferable. In the freeze coagulation method, no coagulant is used and therefore an acrylic resin film having excellent water resistance tends to be obtained.

In order to remove foreign bodies by which the polymer latex is contaminated, the polymer latex is preferably filtrated prior to a coagulation step, for example, through a metal mesh having an aperture size of not more than 50 μm. From the viewpoint of easy and uniform dispersion at the time of melt kneading with the acrylic thermoplastic resin component, the crosslinked rubber particle component is preferably obtained as a particle agglomerate having a size of not more than 1000 μm and is more preferably obtained as a particle agglomerate having a size of not more than 500 μm. The shape of the particle agglomerate is not particularly limited, and may be a pellet-shape in which outermost layer parts fuse with each other, a powdery-shape such as powder and granules, or the like.

The amount of the crosslinked rubber particle component comprised in the resin composition used in the present invention is 30 to 5% by mass, preferably 25 to 10% by mass, and more preferably 20 to 15% by mass. In the resin composition used in the present invention, the mass ratio of the crosslinked rubber particle component to the acrylic thermoplastic resin component is preferably from 5/95 to 30/70, more preferably from 10/90 to 25/75, and further preferably from 15/85 to 20/80.

The resin composition used in the present invention may also comprises various additives, where appropriate, in an amount of preferably not more than 0.5% by mass and more preferably not more than 0.2% by mass. When the contents of the additives are too high, the resulting film may have a defective appearance such as a silver streak or water resistance may decrease.

Examples of the additives include an antioxidant, a thermal degradation inhibitor, an ultraviolet absorber, a light stabilizer, a lubricant, a mold release agent, a polymer processing aid, an antistatic agent, a flame retardant, a dye and a pigment, a light dispersing agent, an organic coloring agent, a delustering agent, an impact resistance modifier, a fluorescent substance, and the like.

The antioxidant by itself has an effect to prevent oxidative degradation of a resin caused in the presence of oxygen. Examples of the antioxidant include phosphorus antioxidants, hindered phenol antioxidants, thioether antioxidants, and the like. The antioxidant can be used alone or in combination of two or more thereof. Among these, from the viewpoint of the effect to prevent optical properties from being impaired due to discoloration, phosphorus antioxidants and hindered phenol antioxidants are preferable, and concurrent use of a phosphorus antioxidant and a hindered phenol antioxidant is more preferable.

When a phosphorus-based antioxidant and a hindered phenol antioxidant are concurrently used, the mass ratio of the phosphorus antioxidant to the hindered phenol antioxidant is not particularly limited and is preferably from 1/5 to 2/1 and more preferably from 1/2 to 1/1.

As the phosphorus antioxidant, 2,2-methylenebis(4,6-di-tert-butylphenyl)octyl phosphite (manufactured by Asahi Denka, trade name: ADK STAB HP-10) and tris(2,4-di-tert-butylphenyl)phosphite (manufactured by Ciba Specialty Chemicals, trade name: IRGAFOS 168) are preferable, for example.

As the hindered phenol antioxidant, pentaerythrityl-tetrakis[3-(3,5-di-tert-butyl-4-hydr oxyphenyl)propionate] (manufactured by Ciba Specialty Chemicals, trade name: IRGANOX 1010) and octadecyl-3-(3,5-di-tert-butyl-4-hydroxyphenyl)propi onate (manufactured by Ciba Specialty Chemicals, trade name: IRGANOX 1076) are preferable, for example.

The thermal degradation inhibitor can trap a polymer radical that is generated at high heat in the practical absence of oxygen and therefore can prevent thermal degradation of the resin.

As the thermal degradation inhibitor, 2-tert-butyl-6-(3'-tert-butyl-5'-methyl-hydroxybenzy l)-4-methylphenyl acrylate (manufactured by Sumitomo Chemical Co., Ltd., trade name: SUMILIZER GM) and 2,4-di-tert-amyl-6-(3',5'-di-tert-amyl-2'-hydroxy-α-methylbenzyl)phenyl acrylate (manufactured by Sumitomo Chemical Co., Ltd., trade name: SUMILIZER GS) are preferable, for example.

The ultraviolet absorber is a compound capable of absorbing ultraviolet light. The primary function of the ultraviolet absorber is thought to be conversion of light energy into thermal energy.

Examples of the ultraviolet absorber include benzophenones, benzotriazoles, triazines, benzoates, salicylates, cyanoacrylates, oxalic anilides, malonic acid esters, formamidines, and the like. The ultraviolet absorber can be used alone or in combination of two or more thereof.

Preferable among these are benzotriazoles, or ultraviolet absorbers having $\varepsilon_{max}$, which is the maximum molar absorption coefficient at a wavelength of 380 to 450 nm, of not more than 1200 $dm^3 \cdot mol^{-1} cm^{-1}$.

Benzotriazoles effectively inhibit optical properties from being impaired due to, for example, discoloration caused by ultraviolet exposure, and therefore are preferably used as an ultraviolet absorber when the film of the present invention is used in applications where such a property is required.

As the benzotriazoles, 2,2'-methylenebis[4-(1,1,3,3-tetramethylbutyl)-6-[(2 H-benzotriazol-2-yl)phenol]] (manufactured by Adeka Corporation, trade name: ADK STAB LA-31), 2-(2H-benzotriazol-2-yl)-4-(1,1,3,3-tetramethylbutyl )phenol (manufactured by Ciba Specialty Chemicals, trade name: TINUVIN 329), and 2-(2H-benzotriazol-2-yl)-4,6-bis(1-methyl-1-phenylet hyl)phenol (manufactured by Ciba Specialty Chemicals, trade name: TINUVIN 234) are preferable, for example.

The ultraviolet absorbers having $\varepsilon_{max}$, which is the maximum molar absorption coefficient at a wavelength of 380 to 450 nm, of not more than 1200 $dm^3 \cdot mol^{-1} cm^{-1}$ can inhibit yellowing of the resulting shaped article.

The maximum molar absorption coefficient, $\varepsilon_{max}$, of the ultraviolet absorber is measured as follows. To 1 L of cyclohexane, 10.00 mg of the ultraviolet absorber is added and dissolved until no undissolved matter is visually observed. The resulting solution is poured into a quartz glass cell of 1 cm × 1 cm × 3 cm and the absorbance at a wavelength of 380 to 450 nm is measured by a U-3410 spectrophotometer manufactured by Hitachi, Ltd. Using the molecular weight (Mw) of the ultraviolet absorber and the maximum absorbance ($A_{max}$) thus measured, the maximum molar absorption coefficient, $\varepsilon_{max}$, is calculated by the formula:

$$\varepsilon_{max} = [A_{max}/(10 \times 10^{-3})] \times Mw$$

Examples of the ultraviolet absorbers having $\varepsilon_{max}$, which is the maximum molar absorption coefficient at a wavelength of 380 to 450 nm, of not more than 1200 $dm^3 \cdot mol^{-1} cm^{-1}$ include 2-ethyl-2'-ethoxy-oxalic anilide (manufactured by Clariant (Japan) K.K., trade name: Sanduvor VSU) and the like.

Among the ultraviolet absorbers, from the viewpoint that degradation of the resin caused by ultraviolet exposure is inhibited, benzotriazoles are preferably used.

The light stabilizer is a compound that is thought to function primarily to trap a radical generated by light oxidation. Preferable examples of the light stabilizer include hindered amines such as compounds having a 2,2,6,6-tetraalkylpiperidine skeleton, and the like.

The mold release agent is a compound that functions to facilitate release of a film from a mold. Examples of the mold release agent include higher alcohols such as cetyl alcohol, stearyl alcohol and the like; glycerol higher fatty acid esters such as stearic monoglyceride, stearic diglyceride and the like. As the mold release agent in the present invention, a higher alcohol and a glycerol fatty acid monoester are preferably used in combination. When a higher alcohol and a glycerol fatty acid monoester are used in combination, the mass ratio of the higher alcohol to the glycerol fatty acid monoester is not particularly limited and is preferably from 2.5/1 to 3.5/1 and more preferably from 2.8/1 to 3.2/1.

The polymer processing aid is a compound that exhibits its effect when forming a methacrylate resin composition into an accurate thickness and giving a thin film. The polymer processing aid is usually a polymer particle with a particle diameter of 0.05 to 0.5 μm that can be produced by the emulsion polymerization method. Such a polymer particle may be a monolayer particle of a polymer having a single composition ratio and a single limiting viscosity or may be a multilayer particle of two or more polymers having different composition ratios or different limiting viscosity. Among these, preferable are particles having a two-layer structure where the inner layer is a polymer layer with low limiting viscosity and the outer layer is a polymer layer with high limiting viscosity of not less than 5 dl/g.

The polymer processing aid has limiting viscosity of preferably 3 to 6 dl/g. When the limiting viscosity is too low, the effect to improve formability tends to be low, while when the limiting viscosity is too high, the melt fluidity of the resin composition tends to be low.

The resin composition used in the present invention may contain an impact resistance modifier. Examples of the impact resistance modifier include core-shell modifiers comprising acrylic rubber or diene rubber as a core layer component; modifiers comprising a plurality of rubber particles; and the like.

Preferable as the organic coloring agent is a compound that functions to convert ultraviolet light, which is thought to be harmful to a resin, into visible light.

Examples of the light dispersing agent and the delustering agent include glass microparticles, polysiloxane crosslinked microparticles, crosslinked polymer microparticles, talc, calcium carbonate, barium sulfate, and the like.

Examples of the fluorescent substance include fluorescent pigments, fluorescent dyes, fluorescent white dyes, fluorescent brighteners, fluorescent bleaching agents, and the like.

The additives may be added to the polymerization reaction solution during production of the resin polymer or may be added to the resin polymer after being produced by a polymerization reaction.

The melt flow rate of the resin composition used in the present invention under conditions of 230 °C and 3.8 kg load is preferably not less than 8 g/10minutes, more preferably 8 to 30 g/10minutes, further preferably 8 to 25 g/10minutes, and most preferably 10 to 20 g/10minutes. The melt flow rate here is a value measured in conformity with JIS K7210 under conditions of 230 °C, 3.8 kg load, and 10 minutes.

As for the resin composition used in the present invention, the difference between the yellow index (YI4) for optical path length of 200 mm of an article resulting from injection molding performed at a cylinder temperature of 280 °C and a molding cycle of 4 minutes and the yellow index (YI1) for optical path length of 200 mm of an article resulting from injection molding performed at a cylinder temperature of 280 °C and a molding cycle of 1 minute is preferably not more than 3, more preferably not more than 2.5, and further preferably not more than 2. The yellow index (YI1) for optical path length of 200 mm of an article resulting from injection molding performed at a cylinder temperature of 280 °C and a molding cycle of 1 minute is preferably not more than 5, more preferably not more than 4, and further preferably not more than 3. The yellow index here is a value measured on a colorimeter ZE-2000 manufactured by Nippon Denshoku Industries Co., Ltd. in conformity with JIS Z-8722.

The acrylic resin film of the present invention can be obtained by shaping the resin composition described above by a known method such as the casting method, the extrusion forming method, the inflation forming method, and the compression forming method. Among the film forming processes, preferable are method that comprises extruding the resin composition described above through a T-die and then forming the resultant with no bank.

The T-die used is not particularly limited and is preferably a coat-hanger T-die from the viewpoint of consistent fluidity of the melted resin composition in the T-die.

In addition, the T-die used is preferably a self-adjusting die that has a feedback mechanism to measure the film thickness and make fine adjustments to achieve a target lip opening so as to reduce irregularities in the film thickness. The lip opening is preferably not more than 1 mm and more preferably not more than 0.8 mm. By pulling the melted resin (melt curtain) discharged through such a lip opening using a roll or a belt to be described below and then forming the resultant into a film with no bank, an acrylic resin film having a thickness of 20 to 300 $\mu$m can be obtained. As a result, the residual strain and the heat shrinkage ratio of the film can be decreased. Extrusion of the resin composition can be performed using a known extruder such as a single screw extruder and a twin screw extruder. In order to efficiently remove a component having a low molecular weight such as a monomer, a dimer and the like, an extruder equipped with a vent system is preferably used. The extrusion temperature is usually 240 °C to 290 °C and is preferably 250 °C to 280 °C.

The melted resin composition discharged through the lip of the T-die is pulled using a roll or a belt while being cooled, to be formed into a film. The pulling of the film may be performed using a single roll or a single belt. However, in the present invention, from the viewpoint that the surface evenness of the resulting acrylic resin film can be improved and omission in printing that occurs at the time of printing the resulting acrylic resin film can be inhibited, the film is preferably pulled while being held between two or more rolls or belts. The roll (s) or belt (s) used can be a known roll(s) or a known belt(s), and examples thereof include a metal roll, a metal belt, a non-metal roll, and the like.

Examples of the metal roll include a touch roll produced by subjecting a metal rigid roll or a metal elastic roll made of stainless steel, iron steel or the like to treatment such as chrome plating or ceramic thermal spraying and then to mirror polishing; a sleeve-touch roll composed of a metal sleeve (a metal thin-wall pipe) and a molding roll; and the like. Examples of the metal belt include an endless belt made of stainless steel, iron steel or the like, and the like. Examples of the non-metal roll include a roll made of silicon rubber or the like, and the like. Among these, from the viewpoint that residual strain can be kept low, a metal elastic roll is preferable.

When the melted resin composition is pulled while being held between two or more rolls or belts, the melted resin composition is preferably discharged while being held between them with no bank (a state in which substantially no resin-rich area is formed) . The state with no bank can be obtained, for example, by adjusting the lip opening of the die to 0.5 to 1 mm and controlling the rotational speed of the two rolls. The linear pressure between the rolls is preferably 5 to 50 N/mm. By controlling the linear pressure between the rolls, a film onto which the roll surface profile (the mirror surface, or the patterned indented surface) is precisely transferred can be obtained. While the film is being formed with no bank (no resin-rich area), the resin composition during a cooling step undergoes surface transfer without being rolled and, accordingly, the resulting acrylic resin film has small residual strain, a low heat shrinkage ratio, and high chemical resistance compared to when the film is formed otherwise.

By providing desired concavo-convex shape to the surface of at least one roll or belt among the plurality of rolls or belts, patterning such as embossing and matting can be performed to the acrylic resin film.

The present invention also includes a film obtained by extrusion forming and then stretching the acrylic thermoplastic resin of the present invention. The stretching method is not particularly limited. Examples thereof include a method comprising stretching in a machine direction (MD) (the vertical stretching method), a method comprising stretching in a direction oblique to the MD, a method comprising stretching in a transverse direction (TD) (the transverse stretching method), a method comprising performing vertical stretching and transverse stretching in sequence (the sequential biaxial stretching method), a method comprising stretching simultaneously in the MD and the TD (the simultaneous biaxial stretching method), and the like. In the present invention, a biaxially stretched acrylic resin film is suitably used.

The acrylic resin film of the present invention can have pictures, letters or the like printed on one side or on both sides, where appropriate, as decorating. Examples of the printing method include the gravure printing method, the flexographic printing method, the silk screen printing method, and the like.

The acrylic resin film of the present invention thus obtained can be suitably used for decorating. The method of decorating is not particularly limited. Examples thereof include a method of applying the acrylic resin film of the present invention as it is, or after at least one of the surfaces is printed, onto a surface of an article to be decorated (the lamination method); a method of subjecting the acrylic resin film of the present invention to vacuum formation or pressure formation to be formed into the shape of an article to be decorated and then placing the resultant in an injection mold, and conducting injection molding so as to simultaneously conduct forming and decorating (the insert molding method); a method of subjecting the acrylic resin film of the present invention to vacuum formation or pressure formation within the cavity of an injection mold and then conducting injection molding so as to simultaneously conduct forming and decorating (the in-mold molding method); a method of, in a vacuum within the cavity of a mold, bringing the acrylic resin film of the present invention into contact with a surface of an article to be decorated, followed by vacuum and press forming to apply decorating (the vacuum- and pressure-forming method, the TOM forming method); and the like.

The thermoplastic resin for use in forming an article to be decorated is not particularly limited provided that it has good adhesion to the acrylic resin film of the present invention. Examples thereof include ABS resins, AS resins, AES resins, polycarbonate resins, vinyl chloride resins, acrylic resins, polyester resins, styrene resins, and the like. When a base resin is a polyolefin resin or the like that is less likely to achieve thermal adhesion, an adhesive-agent layer can be layered to the acrylic resin film of the present invention in advance to conduct decorating.

Decorating can also be conducted by applying a lamination film to a surface of an article to be decorated by the lamination method, the insertion method, the in-mold molding method, the vacuum forming method, or the vacuum- and pressure-forming method (the TOM forming method, for example) described above, in which the laminate film is obtained by applying the acrylic resin film of the present invention onto a thermoplastic resin sheet or another thermoplastic resin film (hereinafter, sometimes called a base sheet).

Further, the acrylic resin film of the present invention can be provided, on one side or on both sides thereof, with a hard coating layer, an antifouling layer, a functional layer to control a ray of light (a layer to reflect or absorb infrared light, a wavelength conversion layer, a photocatalytic layer or the like, for example), and the like. Furthermore, the acrylic resin film of the present invention can be provided with a cohesive layer on one side or on both sides thereof and then bonded to another film for use as a functional film.

Examples of a thermoplastic resin to form the base sheet include polypropylene, ABS resins, polyester resins, polyvinyl chloride, acrylic resins containing a delustering agent and/or a colorant, and the like. Lamination of the base sheet and the acrylic resin film of the present invention can be performed, for example, by heat lamination or lamination using an adhesive agent or a gluing agent. The base sheet can also have pictures and the like printed in advance and then, to the printed side, the acrylic resin film of the present invention can be laminated.

Uses of the acrylic resin film of the present invention are not particularly limited. Examples thereof include vehicle decorative parts such as vehicle exterior parts, vehicle interior parts and the like; construction material parts such as wall materials, window films, wall materials for bathrooms and the like; daily necessities such as eating utensils, toys or the like; appliances decorative parts such as vacuum cleaner housings, television housings, air conditioner housings or the like; interior components such as surface materials for kitchen doors or the like; ship components; electronic communication devices such as surface materials for touch panels, personal computer housings, mobile phone housings and the like; optics-related parts, such as protective plates for liquid crystal, light guide plates, light guide films, protective films for polarizers, protective films for polarizing plates, retardation films, front plates and surface materials for various displays, light dispersing plates and the like; components for photovoltaic power generation, such as surface materials for solar cells or photovoltaic power generation panels; and the like.

EXAMPLES

The present invention will be described in more detail by examples and comparative examples. The scope of the present invention, however, is not limited to these examples. In the examples and the comparative examples, measurement of physical properties and evaluation were performed by methods described below.

(Average particle diameter of crosslinked rubber particle)

Measurement was performed on a laser diffraction/scattering particle size distribution analyzer, LA-910, manufactured by HORIBA, Ltd.

(Weight average molecular weight (Mw) and molecular weight distribution (Mw/Mn) of acrylic thermoplastic resin)

To a high-performance liquid chromatography system, columns for gel permeation chromatography (GPC) that were "GPC-802", "HSG-30" and "HSG-50" manufactured by Shimadzu Corporation and "Shodex A-806" manufactured by Showa Denko K.K. were connected in series. A differential refractive index detector was used as a detector. Tetrahydrofuran was used as an eluting solution. Analysis was performed under conditions where a flow rate of the eluting solution was 1.5 ml/minute. Using standard polystyrene with a known molecular weight for calibration, the weight average molecular weight and the molecular weight distribution of an acrylic thermoplastic resin were determined. The sample solution used was prepared by weighing 0.12 g of the acrylic thermoplastic resin, adding thereto 20 ml of tetrahydrofuran to dissolve the acrylic thermoplastic resin, and then performing filtration through a membrane filter having a pore size of 0.5 $\mu$m.

(Double-bond content)

A resin for measurement was dissolved in deuterated chloroform to give a solution containing 20% by mass of the resin. To the resulting solution, tris(6,6,7,7,8,8,8-heptafluoro-2,2-dimethyl-3,5-octa nedionate) europium as a peak-shifting reagent in an amount of 10% by mass relative to the amount of the resin was added, followed by measuring an H$^1$-NMR spectrum for not less than 12 hours and calculating the total thereof.
The double-bond content was determined by calculation by a numerical expression of $D = (X/2)/(Y/3) \times 100$, in which X was the total integral intensity of peaks derived from double bonds (resonance frequency: 5.5 ppm and 6.2 ppm) and Y was the integral intensity of peaks derived from methoxy groups (resonance frequency: 3.6 ppm).

(Sulfur content)

A resin for measurement was dissolved in chloroform and then precipitated with n-hexane. The sample after precipitation was subjected to vacuum drying at 80 °C for not less than 12 hours. Subsequently, a proper amount of the resulting sample was precisely weighed, and placed in a sulfur combustion apparatus in a furnace at a temperature of 400 °C for decomposition. The generated gas was passed through a furnace at 900 °C and then absorbed in a 0.3% hydrogen peroxide solution. The solution after absorption was diluted with deionized water as needed, and the resultant was subjected to ion chromatography analysis (ICS-1500 manufactured by DIONEX, column: AS12A) for quantitative assessment of sulfate ions. The resulting value and the weight of the sample were used to calculate the proportion by mass of sulfur atoms in the resin.

(Trimer content)

A resin for measurement was dissolved in chloroform to give a solution, which was subjected to extraction and separation with hexane, followed by quantitative assessment of trimers by gas chromatography (GC-14A manufactured by Shimadzu Corporation) . The resulting value and the weight of the sample were used to calculate the proportion by mass of trimers in the resin.

(Polymerization conversion ratio)

To a gas chromatography system (GC-14A manufactured by Shimadzu Corporation), a column (GLC-G-230 manufactured by Sciences Inc., INERT CAP 1 (df = 0.4 $\mu$m, I.D. = 0.25 mm, length = 60 m)) was connected. Analysis was performed under conditions where the injection temperature was 180 °C, the detector temperature was 180 °C, and the column temperature was raised from 60 °C to reach 200 °C at a temperature raising rate of 10 °C/minute.

(Chemical resistance)

A sunscreen shown in Table 1 in an amount of 0.05 to 0.25 g was applied onto surface of a film, and thereonto, a piece of gauze, an aluminum plate (75 mm × 150 mm × 1 mm), and a weight (500 g) were placed, followed by being left at a temperature shown in Table 1 for 1 hour. Then, the weight, the aluminum plate, and the gauze were removed, and the surface of the film was subjected to observation for evaluation based on the criteria below.

Good: No change in appearance
Fair: No gauze mark left, but slight whitening observed
Poor: A gauze mark left

(Water resistance)

The film was immersed in warm water at 80 °C for 24 hours. The film was taken out of the warm water and the appearance was observed for any change for evaluation based on the criteria below.

Good: No change in appearance
Fair: Slight whitening observed
Poor: Considerable whitening observed

[Table 1]

Table 1

|  | Sunscreen | Temperature |
|---|---|---|
| Chemical a | Coppertone Perfect Milk Moist (SPF 50) | 80°C |
| Chemical b | NIVEA Sun Protect Water Milk (SPF 50) | 80°C |
| Chemical c | Coppertone Spray (SPF 30) | Room Temperature |

<Reference Example 1>

[Production of crosslinked rubber particle (A1)]

(1) In a reactor equipped with a stirrer, a thermometer, a nitrogen-gas inlet tube, a monomer inlet tube and a reflux condenser, 1050 parts by mass of ion-exchanged water, 0.3 part by mass of sodium polyoxyethylene tridecyl ether acetate and 0.7 part by mass of sodium carbonate were placed, followed by thorough substitution of the interior of the reactor with nitrogen gas. Then, the internal temperature was made 80 °C. To the reactor, 0.25 part by mass of potassium persulfate was added, followed by stirring for 5 minutes. Thereto, 245 parts by mass of a monomer mixture of 95.4% by mass of methyl methacrylate, 4.4% by mass of methyl acrylate, and 0.2% by mass of allyl methacrylate was continuously added dropwise over 60 minutes. After the completion of dropwise addition, the polymerization reaction was allowed to proceed for another 30 minutes until the polymerization conversion ratio reached not less than 98%.
(2) Then, to the reactor, 0.32 part by mass of potassium persulfate was added, followed by stirring for 5 minutes. Subsequently, 315 parts by mass of a monomer mixture of 80.5% by mass of butyl acrylate, 17.5% by mass of styrene, and 2% by mass of allyl methacrylate was continuously added dropwise for over 60 minutes. After the completion of dropwise addition, the polymerization reaction was allowed to proceed for another 30 minutes until the polymerization conversion ratio reached not less than 98%.
(3) Then, to the reactor, 0.14 part by mass of potassium persulfate was added, followed by stirring for 5 minutes. Subsequently, 140 parts by mass of a monomer mixture of 95.2% by mass of methyl methacrylate, 4.4% by mass of methyl acrylate, and 0.4% by mass of n-octyl mercaptan was continuously added dropwise over 30 minutes. After the completion of dropwise addition, the polymerization reaction was allowed to proceed for another 60 minutes until the polymerization conversion ratio reached not less than 98%. The procedure above gave latex containing a crosslinked rubber particle (A1). The resulting latex containing the crosslinked rubber particle (A1) was subjected to freezing for coagulation. The resultant was subjected to washing with water and drying to give a crosslinked rubber particle (A1). The average particle diameter of the particle (A1) was 0.23 μm.

<Reference Example 2>

[Production of resin polymer (B1)]

A monomer composed of 100% by mass of methyl methacrylate was subjected to bulk polymerization to give a resin polymer (B1) having a weight average molecular weight of 80000. The physical properties and the like of the resin polymer (B1) are shown in Table 2.

<Reference Example 3>

[Production of resin polymer (B2)]

A monomer composed of 90% by mass of methyl methacrylate and 10% by mass of methyl acrylate was subjected to bulk polymerization to give a resin polymer (B2) having a weight average molecular weight of 60000. The physical properties and the like of the resin polymer (B2) are shown in Table 2.

<Reference Example 4>

[Production of resin polymer (B3)]

A monomer composed of 94% by mass of methyl methacrylate and 6% by mass of methyl acrylate was subjected to bulk polymerization to give a resin polymer (B3) having a weight average molecular weight of 60000. The physical properties and the like of the resin polymer (B3) are shown in Table 2.

<Reference Example 5>

[Production of resin polymer (B4)]

A monomer composed of 80% by mass of methyl methacrylate and 20% by mass of butyl acrylate was subjected to bulk polymerization to give a resin polymer (B4) having a weight average molecular weight of 2000000. The physical properties and the like of the resin polymer (B4) are shown in Table 2.

[Table 2]

Table 2

|  | Ref. Ex. | | | |
|---|---|---|---|---|
|  | 2 | 3 | 4 | 5 |
| Resin polymer | B1 | B2 | B3 | B4 |
| Methyl methacrylate | 100 | 90 | 94 | 80 |
| Methyl acrylate |  | 10 | 6 |  |
| Butyl acrylate |  |  |  | 20 |
|  |  |  |  |  |
| Mw $\times 10^4$ | 8.0 | 6.0 | 6.0 | 200 |
| Mw/Mn | 1.8 | 2.0 | 2.0 | 3.0 |
| Double-bond content [mol%] | 0.015 | - | - | - |
| Sulfur content [ppm] | 600 | - | - | - |

(continued)

| | Ref. Ex. | | | |
|---|---|---|---|---|
| | 2 | 3 | 4 | 5 |
| Resin polymer | B1 | B2 | B3 | B4 |
| Trimer content [ppm] | 20 | - | - | - |

<Example 1>

In a Henschel mixer, 16 parts by mass of the crosslinked rubber particle (A1) and 84 parts by mass of the resin polymer (B1) as an acrylic thermoplastic resin component were mixed. The resulting mixture was subjected to melt kneading in a single screw extruder at 40 mmφ to give a resin composition as a pellet. The resulting resin composition pellet was subjected to melt extrusion in a twin screw extruder equipped with a T-die. The melted resin composition discharged through the lip of the die with a lip opening of 1 mm was pulled using a metal elastic roll and a rigid roll at a linear pressure of 30 N/mm to give an acrylic resin film (1) having a thickness of 125 μm. The physical properties of the acrylic thermoplastic resin component are shown in Table 3. The results of evaluation of the film are shown in Table 4.

<Example 2>

An acrylic resin film (2) having a thickness of 75 μm was obtained by the same method as in Example 1 except that the rotational speeds of the metal elastic roll and the rigid-body roll were changed. The physical properties of the acrylic thermoplastic resin component are shown in Table 3. The results of evaluation of the film are shown in Table 4.

<Example 3>

An acrylic resin film (3) having a thickness of 125 μm was obtained by the same method as in Example 1 except that 16.4 parts by mass of the crosslinked rubber particle (A1), 78 parts by mass of the resin polymer (B2), and 8 parts by mass of the resin polymer (B1) were used instead of 16 parts by mass of the crosslinked rubber particle (A1) and 84 parts by mass of the resin polymer (B1). The physical properties of the acrylic thermoplastic resin component comprising 78 parts by mass of the resin polymer (B2) and 8 parts by mass of the resin polymer (B1) are shown in Table 3. The results of evaluation of the film are shown in Table 4.

<Example 4>

An acrylic resin film (4) having a thickness of 50 μm was obtained by the same method as in Example 1 except that 75 parts by mass of the resin polymer (B1), 8 parts by mass of the resin polymer (B3), and 1 part by mass of the resin polymer (B4) were used instead of 84 parts by mass of the resin polymer (B1) and the rotational speeds of the metal elastic roll and the rigid roll were changed. The physical properties of the acrylic thermoplastic resin component comprising 75 parts by mass of the resin polymer (B1), 8 parts by mass of the resin polymer (B3), and 1 part by mass of the resin polymer (B4) are shown in Table 3. The results of evaluation of the film are shown in Table 4.

<Example 5>

An acrylic resin film (5) having a thickness of 125 μm was obtained by the same method as in Example 1 except that 20 parts by mass of the crosslinked rubber particle (A1) and 80 parts by mass of the resin polymer (B1) as an acrylic thermoplastic resin component were used instead of 16 parts by mass of the crosslinked rubber particle (A1) and 84 parts by mass of the resin polymer (B1). The physical properties of the acrylic thermoplastic resin component are shown in Table 3. The results of evaluation of the film are shown in Table 4.

<Example 6>

An acrylic resin film (6) having a thickness of 50 μm was obtained by the same method as in Example 1 except that 20 parts by mass of the crosslinked rubber particle (A1), 71 parts by mass of the resin polymer (B1), 8 parts by mass of the resin polymer (B3), and 1 part by mass of the resin polymer (B4) were used instead of 16 parts by mass of the crosslinked rubber particle (A1) and 84 parts by mass of the resin polymer (B1) and the rotational speeds of the metal elastic roll and the rigid roll were changed. The physical properties of the acrylic thermoplastic resin component comprising 71 parts by mass of the resin polymer (B1), 8 parts by mass of the resin polymer (B3), and 1 part by mass of the resin polymer (B4) are shown in Table 3. The results of evaluation of the film are shown in Table 4.

<Comparative Example 1>

An acrylic resin film (7) having a thickness of 125 μm was obtained by the same method as in Example 1 except that 20 parts by mass of the crosslinked rubber particle (A1), 10 parts by mass of the resin polymer (B2), 68.5 parts by mass of the resin polymer (B3), and 1.5 parts by mass of the resin polymer (B4) were used instead of 16 parts by mass of the crosslinked rubber particle (A1) and 84 parts by mass of the resin polymer (B1). The physical properties of the acrylic thermoplastic resin component comprising 10 parts by mass of the resin polymer (B2), 68.5 parts by mass of the resin polymer (B3), and 1.5 parts by mass of the resin polymer (B4) are shown in Table 3. The results of evaluation of the film are shown in Table 4.

<Comparative Example 2>

An acrylic resin film (8) having a thickness of 50 μm was obtained by the same method as in Comparative Example 1. The physical properties of the acrylic thermoplastic resin component comprising 10 parts by mass of the resin polymer (B2), 68.5 parts by mass of the resin polymer (B3), and 1.5 parts by mass of the resin polymer (B4) are shown in Table 3. The results of evaluation of the film are shown in Table 4.

<Comparative Example 3>

An acrylic resin film (9) having a thickness of 125 μm was obtained by the same method as in Example 1 except that 84 parts by mass of the resin polymer (B3) was used instead of 84 parts by mass of the resin polymer (B1). The physical properties of the acrylic thermoplastic resin component comprising 84 parts by mass of the resin polymer (B3) are shown in Table 3. The results of evaluation of the film are shown in Table 4.

<Comparative Example 4>

An acrylic resin film (10) having a thickness of 125 μm was obtained by the same method as in Example 1 except that 50 parts by mass of the resin polymer (B1) and 34 parts by mass of the resin polymer (B3) were used instead of 84 parts by mass of the resin polymer (B1). The physical properties of the acrylic thermoplastic resin component comprising 50 parts by mass of the resin polymer (B1) and 34 parts by mass of the resin polymer (B3) are shown in Table 3. The results of evaluation of the film are shown in Table 4.

[Table 3]

Table 3

| | | Acrylic thermoplastic resin component | | | | Mw $\times 10^4$ | Mw/Mn | Methyl methacrylate unit [mass%] | Alkyl acrylate ester unit [mass%] |
| | | Resin polymer B1 [mass%] | Resin polymer B2 [mass%] | Resin polymer B3 [mass%] | Resin polymer B4 [mass%] | | | | |
|---|---|---|---|---|---|---|---|---|---|
| Ex. 1 | | 100 | - | - | - | 8.0 | 1.8 | 100 | 0 |
| Ex. 2 | | 100 | - | - | - | 8.0 | 1.8 | 100 | 0 |
| Ex. 3 | | 90.7 | 9.3 | - | - | 7.9 | 1.9 | 99.2 | 0.8 |
| Ex. 4 | | 89.3 | - | 9.5 | 1.2 | 8.1 | 1.9 | 99.2 | 0.8 |
| Ex. 5 | | 100 | - | - | - | 8.0 | 1.8 | 100 | 0 |
| Ex. 6 | | 88.8 | - | 10 | 1.2 | 8.1 | 1.9 | 99.2 | 0.8 |
| Comp.Ex. 1 | | - | 12.5 | 85.6 | 1.9 | 6.2 | 2.1 | 98.2 | 1.8 |

(continued)

| | Acrylic thermoplastic resin component | | | | Mw $\times 10^4$ | Mw/Mn | Methyl methacrylate unit [mass%] | Alkyl acrylate ester unit [mass%] |
| | Resin polymer B1 [mass%] | Resin polymer B2 [mass%] | Resin polymer B3 [mass%] | Resin polymer B4 [mass%] | | | | |
|---|---|---|---|---|---|---|---|---|
| Comp.Ex. 2 | - | 12.5 | 85.6 | 1.9 | 6.2 | 2.1 | 98.2 | 1.8 |
| Comp.Ex. 3 | - | - | 100 | - | 6.0 | 2.0 | 95.0 | 5 |
| Comp.Ex . 4 | 59.5 | - | 40.5 | - | 7.0 | 1.9 | 95.0 | 5 |

[Table 4]

Table 4

| | film | Acrylic thermoplastic resin component [mass%] | Crosslinked rubber particle [mass%] | Thickness [μm] | Chemical resistance | | | Water resistance |
|---|---|---|---|---|---|---|---|---|
| | | | | | Chemical a | Chemical b | Chemical c | |
| Ex. 1 | 1 | 84 | 16 | 125 | good | fair | good | good |
| Ex. 2 | 2 | 84 | 16 | 75 | good | fair | good | good |
| Ex. 3 | 3 | 84 | 16 | 125 | good | fair | good | good |
| Ex. 4 | 4 | 84 | 16 | 50 | good | fair | good | good |
| Ex. 5 | 5 | 80 | 20 | 125 | good | fair | good | good |
| Ex. 6 | 6 | 80 | 20 | 50 | good | fair | good | good |
| Comp.Ex. 1 | 7 | 80 | 20 | 125 | fair | poor | poor | poor |
| Comp.Ex. 2 | 8 | 80 | 20 | 50 | fair | poor | poor | poor |
| Comp.Ex. 3 | 9 | 84 | 16 | 125 | poor | poor | poor | poor |
| Comp.Ex. 4 | 10 | 84 | 16 | 125 | fair | poor | poor | poor |

The results above have proved that the acrylic resin film of the present invention has excellent chemical resistance and excellent water resistance.

**Claims**

1.  An acrylic resin film having a thickness of 20 to 300 μm, and the acrylic resin film comprising a resin composition, wherein the resin composition comprises 70 to 95% by mass of an acrylic thermoplastic resin component and 5 to 30% by mass of a crosslinked rubber particle component relative to the mass of the resin composition, the acrylic thermoplastic resin component comprises more than 99% by mass of a methyl methacrylate unit and less than 1% by mass of an alkyl acrylate ester unit relative to the mass of the acrylic thermoplastic resin component; the acrylic thermoplastic resin component comprises a homopolymer (A) comprising a methyl methacrylate unit.

2.  The acrylic resin film according to Claim 1, wherein the acrylic thermoplastic resin component further comprises a homopolymer (B) comprising an alkyl acrylate ester unit, or a copolymer (C) comprising a methyl methacrylate unit and an alkyl acrylate ester unit.

3.  The acrylic resin film according to Claim 1 or 2, wherein the content of the homopolymer (A) is not less than 80% by mass relative to the mass of the acrylic thermoplastic resin component.

4.  The acrylic resin film according to any one of Claims 1 to 3, wherein the homopolymer (A) has a double-bond content of less than 0.02 mol%, a sulfur content of 400 to 700 ppm, and a trimer content of not more than 50 ppm; and wherein the double-bond content, the sulfur content and the trimer content have been determined as described in the description.

5.  The acrylic resin film according to any one of Claims 1 to 4, wherein the crosslinked rubber particle component has an average particle diameter of 0.05 to 1 μm, wherein the average particle diameter is the arithmetic mean of a volume-based particle diameter distribution as measured by the light scattering method using a laser diffraction/scattering particle size distribution analyzer.

6.  The acrylic resin film according to any one of Claims 1 to 4, the crosslinked rubber particle component comprising a multilayered acrylic polymer particle which comprises
    at least one inner layer comprising a crosslinked rubber polymer (I) primarily comprising a unit derived from an alkyl acrylate ester monomer having an alkyl group having 1 to 8 of carbon atoms and/or a unit derived from a conjugated diene monomer, and
    an outermost layer comprising a thermoplastic polymer (II) primarily comprising a unit derived from an alkyl methacrylate ester monomer having an alkyl group having 1 to 8 carbon atoms.

7.  The acrylic resin film according to any one of Claims 1 to 4, being a biaxial stretched film.

8.  The acrylic resin film according to any one of Claims 1 to 4, wherein the acrylic thermoplastic resin component is a bulk-polymerized product of methyl methacrylate.

9.  The acrylic resin film according to any one of Claims 1 to 8, wherein the acrylic thermoplastic resin component has a weight average molecular weight of not less than fifty thousand and not more than one hundred thousand, and wherein the weight average molecular weight is determined by subjecting the acrylic thermoplastic resin component to analysis on gel permeation chromatography (GPC) and evaluating the molecular weight in terms of the molecular weight of standard polystyrene.

10. The acrylic resin film according to any one of Claims 1 to 9, wherein the acrylic thermoplastic resin component has a ratio of weight average molecular weight to number average molecular weight of 1.7 to 2.6, and wherein the weight average molecular weight and the number average molecular weight are determined by subjecting the acrylic thermoplastic resin component to analysis on gel permeation chromatography (GPC) and evaluating the molecular weight in terms of the molecular weight of standard polystyrene.

11. A method for producing the acrylic resin film according to Claim 1, the method comprising:
    extruding, through a T-die, a resin composition comprising 70 to 95% by mass of an acrylic thermoplastic resin component and 5 to 30% by mass of a crosslinked rubber particle component relative to the mass of the resin composition, the acrylic thermoplastic resin component comprising more than 99% by mass of a methyl methacrylate unit and less than 1% by mass of an alkyl acrylate ester unit relative to the mass of the acrylic thermoplastic resin component; the acrylic thermoplastic resin component comprises a homopolymer (A) comprising a methyl methacrylate unit, and subsequently forming the resultant into a thickness of 20 to 300 $\mu$m with no bank.

12. The method for producing the acrylic resin film according to Claim 11, further comprising bulk-polymerizing a monomer comprising at least methyl methacrylate to obtain the acrylic thermoplastic resin component.

13. The method for producing the acrylic resin film according to Claim 11 or 12, wherein the acrylic thermoplastic resin component has a weight average molecular weight of not less than fifty thousand and not more than one hundred thousand, and wherein the weight average molecular weight is determined by subjecting the acrylic thermoplastic resin component to analysis on gel permeation chromatography (GPC) and evaluating the molecular weight in terms of the molecular weight of standard polystyrene.

14. The method for producing the acrylic resin film according to Claim 11, 12 or 13, wherein the acrylic thermoplastic resin component has a ratio of weight average molecular weight to number average molecular weight of 1.7 to 2.6, and wherein the weight average molecular weight and the number average molecular weight are determined by subjecting the acrylic thermoplastic resin component to analysis on gel permeation chromatography (GPC) and evaluating the molecular weight in terms of the molecular weight of standard polystyrene.

## Patentansprüche

1. Acrylharzfilm mit einer Dicke von 20 bis 300 $\mu$m und wobei der Acrylharzfilm eine Harzzusammensetzung umfasst, wobei die Harzzusammensetzung 70 bis 95 Massen-% einer thermoplastischen Acrylharzkomponente und 5 bis 30 Massen-% einer vernetzten Kautschukteilchenkomponente relativ zu der Masse der Harzzusammensetzung umfasst, wobei die thermoplastische Acrylharzkomponente mehr als 99 Massen-% einer Methylmethacrylateinheit und weniger als 1 Massen-% einer Alkylacrylatestereinheit relativ zu der Masse der thermoplastischen Acrylharzkomponente umfasst; wobei die thermoplastische Acrylharzkomponente ein Homopolymer (A) umfasst, das eine Methylmethacrylateinheit umfasst.

2. Acrylharzfilm nach Anspruch 1, wobei die thermoplastische Acrylharzkomponente weiter ein Homopolymer (B), umfassend eine Alkylacrylatestereinheit, oder ein Copolymer (C), umfassend eine Methylmethacrylateinheit und eine Alkylacrylatestereinheit, umfasst.

3. Acrylharzfilm nach Anspruch 1 oder 2, wobei der Gehalt des Homopolymers (A) nicht weniger als 80 Massen-% relativ zu der Masse der thermoplastischen Acrylharzkomponente beträgt.

4. Acrylharzfilm nach einem der Ansprüche 1 bis 3, wobei das Homopolymer (A) einen Doppelbindungsgehalt von weniger als 0, 02 Mol-%, einen Schwefelgehalt von 400 bis 700 ppm und einen Trimergehalt von nicht mehr als 50 ppm aufweist; und wobei der Doppelbindungsgehalt, der Schwefelgehalt und der Trimergehalt wie in der Beschreibung beschrieben bestimmt wurden.

5. Acrylharzfilm nach einem der Ansprüche 1 bis 4, wobei die vernetzte Kautschukteilchenkomponente einen durchschnittlichen Teilchendurchmesser von 0,05 bis 1 $\mu$m aufweist, wobei der durchschnittliche Teilchendurchmesser das arithmetische Mittel einer volumenbasierten Teilchendurchmesserverteilung ist, das mit dem Lichtstreuungsverfahren unter Verwendung eines Teilchengrößenverteilungsanalysators mit Laserbeugung/-streuung gemessen wird.

6. Acrylharzfilm nach einem der Ansprüche 1 bis 4, wobei die vernetzte Kautschukteilchenkomponente ein mehrschichtiges Acrylpolymerteilchen umfasst, das mindestens eine innere Schicht, umfassend ein vernetztes Kautschukpolymer (I), das hauptsächlich eine Einheit, abgeleitet von einem Alkylacrylatestermonomer mit einer Alkylgruppe mit 1 bis 8 Kohlenstoffatomen, und/oder eine Einheit, abgeleitet von einem konjugierten Dienmonomer, umfasst, und
eine äußerste Schicht, umfassend ein thermoplastisches Polymer (II), das hauptsächlich eine Einheit, abgeleitet von einem Alkylmethacrylatestermonomer mit einer Alkylgruppe mit 1 bis 8 Kohlenstoffatomen, umfasst, umfasst.

7. Acrylharzfilm nach einem der Ansprüche 1 bis 4, der ein biaxial gestreckter Film ist.

8. Acrylharzfilm nach einem der Ansprüche 1 bis 4, wobei die thermoplastische Acrylharzkomponente ein massenpolymerisiertes Produkt von Methylmethacrylat ist.

9. Acrylharzfilm nach einem der Ansprüche 1 bis 8, wobei die thermoplastische Acrylharzkomponente ein Gewichtsmittel des Molekulargewichts von nicht weniger als fünf zigtausend und nicht mehr als einhunderttausend aufweist und wobei das Gewichtsmittel des Molekulargewichts durch das Unterwerfen der thermoplastischen Acrylharzkomponente einer Analyse mit Gelpermeationschromatographie (GPC) und dem Berechnen des Molekulargewichts bezüglich des Molekulargewichts des Standards Polystyrol bestimmt wird.

10. Acrylharzfilm nach einem der Ansprüche 1 bis 9, wobei die thermoplastische Acrylharzkomponente ein Verhältnis von Gewichtsmittel des Molekulargewichts zu Zahlenmittel des Molekulargewichts von 1,7 bis 2,6 aufweist und wobei das Gewichtsmittel des Molekulargewichts und das Zahlenmittel des Molekulargewichts durch das Unterwerfen der thermoplastischen Acrylharzkomponente einer Analyse mit Gelpermeationschromatographie (GPC) und dem Berechnen des Molekulargewichts bezüglich des Molekulargewichts des Standards Polystyrol bestimmt wird.

11. Verfahren zur Herstellung des Acrylharzfilms nach Anspruch 1, wobei das Verfahren umfasst:

das Extrudieren durch eine T-Pressform einer Harzzusammensetzung, umfassend 70 bis 95 Massen-% einer thermoplastischen Acrylharzkomponente und 5 bis 30 Massen-% einer vernetzten Kautschukteilchenkomponente relativ zu der Masse der Harzzusammensetzung,
wobei die thermoplastische Acrylharzkomponente mehr als 99 Massen-% einer Methylmethacrylateinheit und weniger als 1 Massen-% einer Alkylacrylatestereinheit relativ zu der Masse der thermoplastischen Acrylharzkomponente umfasst; wobei die thermoplastische Acrylharzkomponente ein Homopolymer (A) umfasst, das eine Methylmethacrylateinheit umfasst, und
anschließend das Formen des Resultierenden in eine Dicke von 20 bis 300 $\mu$m ohne Anhäufung.

12. Verfahren zur Herstellung des Acrylharzfilms nach Anspruch 11, weiter umfassend das Massenpolymerisieren eines Monomers, umfassend mindestens Methylmethacrylat, um die thermoplastische Acrylharzkomponente zu erhalten.

13. Verfahren zur Herstellung des Acrylharzfilms nach Anspruch 11 oder 12, wobei die thermoplastische Acrylharzkomponente ein Gewichtsmittel des Molekulargewichts von nicht weniger als fünfzigtausend und nicht mehr als einhunderttausend aufweist und wobei das Gewichtsmittel des Molekulargewichts durch das Unterwerfen der thermoplastischen Acrylharzkomponente einer Analyse mit Gelpermeationschromatographie (GPC) und dem Berechnen des Molekulargewichts bezüglich des Molekulargewichts des Standards Polystyrol bestimmt wird.

14. Verfahren zur Herstellung des Acrylharzfilms nach Anspruch 11, 12 oder 13, wobei die thermoplastische Acrylharzkomponente ein Verhältnis von Gewichtsmittel des Molekulargewichts zu Zahlenmittel des Molekulargewichts von 1, 7 bis 2, 6 aufweist und wobei das Gewichtsmittel des Molekulargewichts und das Zahlenmittel des Molekulargewichts durch das Unterwerfen der thermoplastischen Acrylharzkomponente einer Analyse mit Gelpermeationschromatographie (GPC) und dem Berechnen des Molekulargewichts bezüglich des Molekulargewichts des Standards Polystyrol bestimmt wird.

## Revendications

1. Film de résine acrylique ayant une épaisseur située dans l'intervalle allant de 20 à 300 $\mu$m, le film de résine acrylique comprenant une composition de résine où la composition de résine comprend 70 à 95% en masse d'un composant acrylique de résine thermoplastique et 5 à 30% en masse d'un composant particules de caoutchouc réticulé par rapport à la masse de la composition de résine, le composant acrylique de résine thermoplastique comprenant plus de 99% en masse d'unités méthacrylate de méthyle et moins de 1% en masse d'unité ester acrylate d'alkyle par rapport à la masse du composant acrylique de résine thermoplastique ; le composant acrylique de résine thermoplastique comprenant un homopolymère (A) comprenant une unité méthacrylate de méthyle.

2. Film de résine acrylique selon la revendication 1, où le composant acrylique de résine thermoplastique comprend en outre, un homopolymère (B) comprenant une unité ester acrylate d'alkyle, ou un copolymère (C) comprenant une unité méthacrylate de méthyle et une unité ester acrylate d'alkyle.

3. Film de résine acrylique selon la revendication 1 ou 2, où la teneur en homopolymère (A) est non inférieure à 80% en masse par rapport à la masse du composant acrylique de résine thermoplastique.

4. Film de résine acrylique selon l'une quelconque des revendications 1 à 3, où l'homopolymère (A) a une teneur en double liaison inférieure à 0,02% en moles, une teneur en soufre située dans l'intervalle allant de 400 à 700 ppm, et une teneur en trimère non supérieure à 50 ppm ; et où la teneur en double liaison, la teneur en soufre et la teneur en trimère ont été déterminées comme décrit dans la description.

5. Film de résine acrylique selon l'une quelconque des revendications 1 à 4, où le composant particules de caoutchouc réticulé présente un diamètre moyen des particules situé dans l'intervalle allant de 0,05 à 1 $\mu$m, où le diamètre moyen des particules est la moyenne arithmétique de la distribution volumique du diamètre des particules, mesurée par le procédé de diffusion de la lumière au moyen d'un analyseur laser de la distribution de la taille particulaire par diffraction/diffusion.

6. Film de résine acrylique selon l'une quelconque des revendications 1 à 4, le composant particules de caoutchouc réticulé comprenant une particule multicouche de polymère acrylique, qui comprend :

au moins une couche interne comprenant un polymère de caoutchouc réticulé (I), comprenant essentiellement une unité dérivée d'un monomère ester acrylate d'alkyle, dont le groupe alkyle comprend 1 à 8 atomes de carbone et/ou une unité dérivée d'un monomère diénique conjugué, et
une couche externe comprenant un polymère thermoplastique (II) comprenant essentiellement, une unité dérivée d'un monomère ester méthacrylate d'alkyle, dont le groupe alkyle comprend 1 à 8 atomes de carbone.

7. Film de résine acrylique selon l'une quelconque des revendications 1 à 4, qui est un film biaxialement étiré.

8. Film de résine acrylique selon l'une quelconque des revendications 1 à 4, où le composant acrylique de résine thermoplastique est un produit polymérisé en masse de méthacrylate de méthyle.

9. Film de résine acrylique selon l'une quelconque des revendications 1 à 8, où le composant acrylique de résine thermoplastique a un poids moléculaire moyen en poids non inférieur à cinquante mille et non supérieur à cent mille, et où le poids moléculaire moyen en poids est déterminé en soumettant le composant acrylique de résine thermoplastique à une analyse par chromatographie de perméation sur gel (GPC) et en évaluant le poids moléculaire en termes de poids moléculaire du polystyrène standard.

10. Film de résine acrylique selon l'une quelconque des revendications 1 à 9, où le composant acrylique de résine thermoplastique présente un rapport du poids moléculaire moyen en poids au poids moléculaire moyen en nombre situé dans l'intervalle allant de 1,7 à 2,6, et où le poids moléculaire moyen en poids et le poids moléculaire moyen en nombre sont déterminés en soumettant le composant acrylique de résine thermoplastique à une analyse par chromatographie de perméation sur gel (GPC) et en évaluant le poids moléculaire en termes de poids moléculaire du polystyrène standard.

11. Procédé de production du film de résine acrylique selon la revendication 1, le procédé comprenant :
l'extrusion par une filière en T, d'une composition de résine comprenant 70 à 95% en masse d'un composant acrylique de résine thermoplastique et 5 à 30% en masse d'un composant particules de caoutchouc réticulé par rapport à la masse de la composition de résine, le composant acrylique de résine thermoplastique comprenant plus de 99% en masse d'unités méthacrylate de méthyle et moins de 1% en masse d'unité ester acrylate d'alkyle par rapport à la masse du composant acrylique de résine thermoplastique ; le composant acrylique de résine thermoplastique comprenant un homopolymère (A) comprenant une unité méthacrylate de méthyle, puis le moulage du produit à une épaisseur située dans l'intervalle allant de 20 à 300 $\mu$m sans laminoir.

12. Procédé de production du film de résine acrylique selon la revendication 11, comprenant en outre, la polymérisation en masse d'un monomère comprenant au moins le méthacrylate de méthyle pour obtenir le composant acrylique de résine thermoplastique.

13. Procédé de production du film de résine acrylique selon la revendication 11 ou 12, le composant acrylique de résine thermoplastique a un poids moléculaire moyen en poids non inférieur à cinquante mille et non supérieur à cent mille, et où le poids moléculaire moyen en poids est déterminé en soumettant le composant acrylique de résine thermoplastique à une analyse par chromatographie de perméation sur gel (GPC) et en évaluant le poids moléculaire en termes de poids moléculaire du polystyrène standard.

**14.** Procédé de production du film de résine acrylique selon la revendication 11, 12 ou 13, le composant acrylique de résine thermoplastique présente un rapport du poids moléculaire moyen en poids au poids moléculaire moyen en nombre situé dans l'intervalle allant de 1,7 à 2,6, et où le poids moléculaire moyen en poids et le poids moléculaire moyen en nombre sont déterminés en soumettant le composant acrylique de résine thermoplastique à une analyse par chromatographie de perméation sur gel (GPC) et en évaluant le poids moléculaire en termes de poids moléculaire du polystyrène standard.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10279766 A
- JP 2004263034 A
- JP 2012180454 A
- JP 2002003620 A

- JP 2008265062 A
- JP 2009235236 A
- JP 2010236085 A
- JP 2010018720 A